(19) Europäisches Patentamt
European Patent Office
Office européen des brevets

(11) EP 3 862 389 B1

(12) **EUROPEAN PATENT SPECIFICATION**

(45) Date of publication and mention of the grant of the patent:
**23.02.2022 Bulletin 2022/08**

(21) Application number: **19882460.9**

(22) Date of filing: **06.11.2019**

(51) International Patent Classification (IPC):
***C08L 11/00*** *(2006.01)* ***C08K 5/39*** *(2006.01)*
***C08K 5/47*** *(2006.01)* ***C08K 5/38*** *(2006.01)*

(52) Cooperative Patent Classification (CPC):
(C-Sets available)
**C08K 5/38; C08K 5/47** (Cont.)

(86) International application number:
**PCT/JP2019/043549**

(87) International publication number:
**WO 2020/095960 (14.05.2020 Gazette 2020/20)**

(54) **CHLOROPRENE RUBBER COMPOSITION AND VULCANIZATION MOLDED BODY**

CHLOROPRENKAUTSCHUKZUSAMMENSETZUNG UND VULKANISATIONSFORMKÖRPER

COMPOSITION DE CAOUTCHOUC CHLOROPRÈNE, ET CORPS MOULÉ PAR VULCANISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2018 JP 2018210656**

(43) Date of publication of application:
**11.08.2021 Bulletin 2021/32**

(73) Proprietor: **Denka Company Limited**
**Tokyo 103-8338 (JP)**

(72) Inventors:
- **KONDO, Atsunori**
  **Itoigawa-city, Niigata 9490393 (JP)**
- **SUNADA, Takashi**
  **Itoigawa-city, Niigata 9490393 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 075 747**
**EP-A1- 3 184 583**
**JP-A- 2002 060 550**
**JP-A- 2002 060 550**
**JP-A- 2006 307 156**
**JP-A- 2011 038 101**
**US-A- 4 683 270**

- **E Fuchs ET AL: "Improvement of the Crosslinking of Polychloroprene 1", , 1 July 2000 (2000-07-01), XP055280735, Retrieved from the Internet: URL:http://www.plastverarbeiter.de/ai/resources/1cc280cdb4b.pdf [retrieved on 2016-06-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 862 389 B1

(52) Cooperative Patent Classification (CPC): (Cont.)

C-Sets
**C08K 5/38, C08L 11/00;**
**C08K 5/47, C08L 11/00**

## Description

### Technical Field

The present invention relates to a chloroprene rubber composition containing a chloroprene-based rubber, a specific sulfur-based compound, and a specific xanthogen disulfide compound, and a vulcanized molded article of this chloroprene rubber composition.

### Background Art

A chloroprene rubber composition is excellent in mechanical properties, flame resistance, and the like, and thus are widely used as materials for industrial rubber products, and various improvements have been made. For example, Patent Literature 1 below discloses a technique of a chloroprene rubber with an improved vulcanization rate. Patent Literatures 2 to 4 below disclose techniques of chloroprene rubber with improved heat resistance.

### Citation List

### Patent Literature

Patent Literature 1: Japanese Unexamined Patent Publication No. 2001-181451
Patent Literature 2: Japanese Unexamined Patent Publication No. 2009-275124
Patent Literature 3: Japanese Unexamined Patent Publication No. 2010-106227
Patent Literature 4: Japanese Unexamined Patent Publication No. 2005-060546

Summary of Invention

### Technical Problem

An aspect of the present invention is intended to provide a chloroprene rubber composition with which a vulcanization rate can be improved while maintaining the compression set of a vulcanized molded article when the chloroprene rubber composition is vulcanized and molded to obtain a vulcanized molded article. Another aspect of the present invention is intended to provide a vulcanized molded article which can be obtained by vulcanizing this chloroprene rubber composition.

### Solution to Problem

An aspect of the present invention provides a chloroprene rubber composition containing 100 parts by mass of a chloroprene-based rubber, 0.5 to 5.0 parts by mass of a sulfur-based compound represented by General Formula (1) below, and more than 0 parts by mass and 2.0 parts by mass or less of a xanthogen disulfide compound represented by General Formula (2) below.

[Chemical Formula 1]

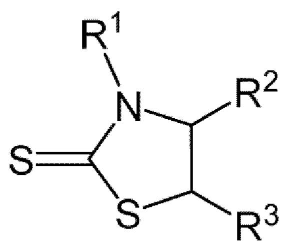

(1)

[In the formula, $R^1$ represents a hydrogen atom, a hydroxyl group, or an alkyl group having 1 to 8 carbon atoms, and $R^2$ and $R^3$ each independently represent a hydrogen atom or an alkyl group having 1 to 8 carbon atoms.]

[Chemical Formula 2]

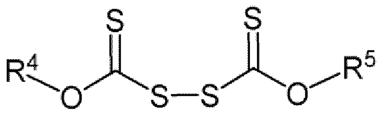

(2)

[In the formula, $R^4$ and $R^5$ each independently represent a hydrogen atom or an alkyl group having 1 to 8 carbon atoms.]

Another aspect of the present invention provides a vulcanized molded article of the aforementioned chloroprene rubber composition.

**Advantageous Effects of Invention**

According to an aspect of the present invention, it is possible to provide a chloroprene rubber composition with which a vulcanization rate can be improved while maintaining the compression set of a vulcanized molded article when the chloroprene rubber composition is vulcanized and molded to obtain a vulcanized molded article. A vulcanized molded article obtained by vulcanizing and molding this chloroprene rubber composition can be suitably used as a vulcanized molded article such as an automobile rubber member (such as a seal material), a hose (hose material), a rubber molded object, and gasket. According to another aspect of the present invention, it is possible to provide a vulcanized molded article which can be obtained by vulcanizing this chloroprene rubber composition.

**Description of Embodiments**

Hereinafter, embodiments for carrying out the present invention will be specifically described. Note that, the present invention is not limited to embodiments described below.

In the present specification, a numerical range that has been indicated by use of "to" indicates the range that includes the numerical values which are described before and after "to", as the minimum value and the maximum value, respectively. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical value range may be replaced with the value shown in Examples. Materials listed as examples in the present specification can be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified.

<Chloroprene rubber composition>

A chloroprene rubber composition of the present embodiment contains 100 parts by mass of a chloroprene-based rubber, 0.5 to 5.0 parts by mass of a specific sulfur-based compound described below, and more than 0 parts by mass and 2.0 parts by mass or less of a specific xanthogen disulfide compound described below. According to the chloroprene rubber composition of the present embodiment, when the chloroprene rubber composition is vulcanized and molded to obtain a vulcanized molded article, a vulcanization rate can be improved (increased) while maintaining the compression set of the vulcanized molded article (maintaining the compression set to be low). Furthermore, according to the chloroprene rubber composition of the present embodiment, by appropriately designing a time for which molding can be performed, excellent moldability can be obtained. That is, according to the present embodiment, it is possible to provide a chloroprene rubber composition with an improved vulcanization rate and improved moldability and provide a vulcanized molded article obtained by vulcanizing this chloroprene rubber composition and having less compression set. A vulcanizate of the present embodiment is a vulcanizate of the chloroprene rubber composition of the present embodiment and can be obtained by vulcanizing the chloroprene rubber composition of the present embodiment.

(1) Chloroprene-based rubber

A chloroprene-based rubber is a chloroprene polymer (for example, chloroprene latex) having a structural unit derived from chloroprene (2-chloro-1,3-butadiene). The chloroprene polymer is a chloroprene homopolymer, a chloroprene copolymer (a copolymer of a monomer copolymerizable with chloroprene and chloroprene), and a mixture of these polymers.

Examples of the monomer copolymerizable with chloroprene include esters of acrylic acid such as methyl

acrylate, butyl acrylate, and 2-ethylhexyl acrylate; esters of methacrylic acid such as methyl methacrylate, butyl methacrylate, and 2-ethylhexyl methacrylate; hydroxy (meth)acrylates such as 2-hydroxyethyl (meth)acrylate, 2-hydroxymethyl (meth)acrylate, and 2-hydroxypropyl (meth)acrylate; 2,3-dichloro-1,3-butadiene; 1-chloro-1,3-butadiene; butadiene; isoprene; ethylene; styrene; and acrylonitrile. The monomer copolymerizable with chloroprene can be used alone or in combination of two or more kinds thereof. The monomer copolymerizable with chloroprene may be, for example, a polymer obtained by copolymerizing three or more kinds of monomers containing chloroprene. Furthermore, the polymer structure of the polymer is also not particularly limited.

From the viewpoint of easily maintaining the compression set of a vulcanized molded article to be low, the viewpoint of easily improving a vulcanization rate, and the viewpoint of easily obtaining excellent moldability, the chloroprene-based rubber is preferably an embodiment in which the chloroprene-based rubber includes at least one selected from a chloroprene homopolymer and a chloroprene copolymer and the chloroprene copolymer includes a copolymer of chloroprene and at least one monomer selected from 2,3-dichloro-1,3-butadiene and acrylonitrile. That is, the chloroprene-based rubber is preferably a 2-chloro-1,3-butadiene homopolymer or a copolymer of 2-chloro-1,3-butadiene and at least one monomer selected from 2,3-dichloro-1,3-butadiene and acrylonitrile.

In the case of using, as the chloroprene-based rubber, the copolymer of the monomer copolymerizable with chloroprene and chloroprene, the content (copolymerized amount) of the structural unit derived from chloroprene is preferably in the following range with respect to 100 parts by mass of the chloroprene-based rubber, from the viewpoint of easily maintaining the compression set of a vulcanized molded article to be low, the viewpoint of easily improving a vulcanization rate, and the viewpoint of easily obtaining excellent moldability. The content of the structural unit derived from chloroprene is preferably 50 parts by mass or more, more preferably 70 parts by mass or more, further preferably 80 parts by mass or more, particularly preferably 90 parts by mass or more, extremely preferably 95 parts by mass or more, highly preferably 97 parts by mass or more, and even more preferably 98 parts by mass or more. The content of the structural unit derived from chloroprene is less than 100 parts by mass, preferably 99.5 parts by mass or less, more preferably 99.2 parts by mass or less, and further preferably 99 parts by mass or less. From these viewpoints, the content of the structural unit derived from chloroprene is preferably 50 parts by mass or more and less than 100 parts by mass.

In the case of using, as the chloroprene-based rubber, the copolymer of the monomer copolymerizable with chloroprene and chloroprene, the content (copolymerized amount) of the structural unit derived from the monomer copolymerizable with chloroprene is preferably in the following range with respect to 100 parts by mass of the structural unit derived from chloroprene or 100 parts by mass of the chloroprene-based rubber, from the viewpoint of easily exhibiting an effect obtained by copolymerizing these monomers without impairing properties of a chloroprene rubber composition to be obtained. The content of the structural unit is preferably 50 parts by mass or less, more preferably 30 parts by mass or less, further preferably 20 parts by mass or less, particularly preferably 10 parts by mass or less, extremely preferably 5 parts by mass or less, highly preferably 3 parts by mass or less, and even more preferably 2 parts by mass or less. The content of the structural unit is more than 0 parts by mass, preferably 0.5 parts by mass or more, more preferably 0.8 parts by mass or more, and further preferably 1 part by mass or more. From these viewpoints, the content of the structural unit is preferably more than 0 parts by mass and 50 parts by mass or less.

A method for producing a chloroprene-based rubber includes a polymerization step of polymerizing a raw material monomer containing chloroprene. The chloroprene-based rubber can be obtained, for example, by emulsion polymerization of a raw material monomer containing chloroprene (for example, a raw material monomer containing chloroprene as a main component) in the presence of a polymerization reaction catalyst, catalyst-activating agent, a polymerization initiator, a chain transfer agent, or the like, using as an emulsifying dispersant.

Examples of the emulsifying dispersant include alkali metal salts of saturated or unsaturated aliphatic acids having 6 to 22 carbon atoms, alkali metal salts of rosin acids or disproportioned rosin acids (for example, potassium rosinate), and alkali metal salts (for example, sodium salt) of β-naphthalenesulfonic acid-formalin condensates.

Examples of the polymerization reaction catalyst include inorganic peroxides such as potassium sulfate; and organic peroxides such as ketone peroxides, peroxy ketals, hydroperoxides, dialkyl peroxides, and diacyl peroxides.

Examples of the catalyst-activating agent include sodium sulfite, potassium sulfite, iron (II) oxide, anthraquinone, sodium β-sulfonate, formamidine sulfonic acid, and L-ascorbic acid.

The polymerization initiator is not particularly limited and a known polymerization initiator, which is generally used in emulsion polymerization of a chloroprene monomer (monomer that is chloroprene), can be used. Examples of the polymerization initiator include potassium persulfate, ammonium persulfate, sodium persulfate, hydrogen peroxide, and t-butyl hydroperoxide.

The chain transfer agent is also not particularly limited, and a chain transfer agent, which is usually used in emulsion polymerization of chloroprene, can be used. Examples of the chain transfer agent include long chain alkylmercaptans such as n-dodecylmercaptan, t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known

as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1-pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyl dithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yldithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yldithiobenzoate, 2-cyanoprop-2-yldithiobenzoate, t-butyl dithiobenzoate, 2,4,4-trimethylpenta-2-yldithiobenzoate, 2-(4-chlorophenyl)-prop-2-yldithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1-carboxylicacid-1-methyl-1-phenyl-ethyl ester, 4-cyano-4-methyl-4-thiobenzyl sulfanyl butyric acid, dibenzyl tetrathioterephthalate, carboxymethyl dithiobenzoate, dithiobenzoate terminal-carrying poly(ethylene oxide), 4-cyano-4-methyl-4-thiobenzylsulfanyl butyrate terminal-carrying poly(ethylene oxide), 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate cyanomethyl methyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbamodithioate, 2-cyano-2-propyldodecyl trithiocarbonate, dibenzyl trithiocarbonate, butylbenzyl trithiocarbonate, 2-[[(butylthio)thioxomethyl]thio] propionic acid, 2-[[(dodecylthio)thioxomethyl]thio] propionic acid, 2-[[(butylthio)thioxomethyl]thio]succi nic acid, 2-[[(dodecylthio)thioxomethyl]thio]succi nic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethyl butyl trithiocarbonate, benzyl-2-[(2-hydroxyethyl)amino]-1-methyl-2-oxoethyl trithiocarbonate, 3-[[[(t-butyl)thio]thioxomethyl]thio] propionic acid, cyanomethyldodecyl trithiocarbonate, diethylaminobenzyl trithiocarbonate, and dibutylaminobenzyl trithiocarbonate.

The polymerization temperature of the chloroprene-based rubber is not particularly limited, and as a temperature at which emulsion polymerization is generally performed, the polymerization temperature is preferably 0°C to 50°C and more preferably 20°C to 50°C. The final polymerization rate of the chloroprene-based rubber obtained in the aforementioned polymerization step is not particularly limited, and it is preferable to arbitrarily adjust the final polymerization rate within a range of 30 to 100%. In order to adjust the final conversion rate, when the conversion rate becomes a desired value, a polymerization terminator for terminating the polymerization reaction can be added to terminate the polymerization.

The polymerization terminator is not particularly limited, and a polymerization terminator, which is usually used, can be used. Specific examples of the polymerization terminator include phenothiazine (thiodiphenylamine), 4-tertiary-butylcatechol, and 2,2-methylenebis-4-methyl-6-tertiary-butylphenol.

Next, the unreacted monomer is removed from a polymer solution obtained by the polymerization step. The method thereof is not particularly limited, and for example, a steam stripping method is mentioned. Thereafter, the pH is adjusted, steps of freeze coagulation, washing with water, hot air drying, and the like of ordinary methods are performed, and thereby a chloroprene-based rubber can be obtained.

(2) Sulfur-based compound

The chloroprene rubber composition of the present embodiment contains a sulfur-based compound represented by General Formula (1) below (hereinafter, referred to as "specific sulfur-based compound"). The specific sulfur-based compound can accelerate the vulcanization of a chloroprene rubber composition to be obtained.

[Chemical Formula 3]

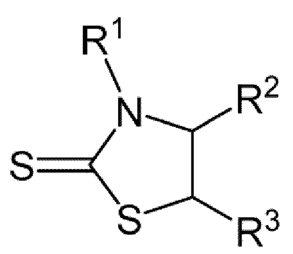

(1)

[In the formula, $R^1$ represents a hydrogen atom, a hydroxyl group, or an alkyl group having 1 to 8 carbon atoms, and $R^2$ and $R^3$ each independently represent a hydrogen atom or an alkyl group having 1 to 8 carbon atoms; and the hydrogen atom of the alkyl group for $R^1$, $R^2$, and $R^3$ may be substituted with a substituent.

From the viewpoint of easily maintaining the compression set of a vulcanized molded article to be low, the viewpoint of easily improving a vulcanization rate, and the viewpoint of easily obtaining excellent moldability, the specific sulfur-based compound preferably satisfies at least one aspect described below.

$R^1$ is preferably a hydrogen atom or an alkyl group having 1 to 8 carbon atoms.

The number of carbon atoms of the alkyl group for $R^1$ is preferably 1 to 4, more preferably 1 to 3, and further preferably 1 or 2.

$R^2$ is preferably a hydrogen atom or an alkyl group having 1 to 4 carbon atoms and more preferably a hydrogen atom or an alkyl group having 1 to 3 carbon atoms.

$R^3$ is preferably a hydrogen atom.

Specific examples of the specific sulfur-based compound include 4-methylthiazolidine-2-thione, 3-methylthiazolidine-2-thione, 5-methylthiazolidine-2-thione, 3,4-dimethylthiazolidine-2-thione, 4,5-dimethylthiazolidine-2-thione, 3,5-dimethylthiazolidine-2-thione, 3,4,5-trimethylthiazolidine-2-thione, 4-ethyl-3-thiazolidine-2-thione, 4-isopropyl-3-thiazolidine-2-thione, 4-isopropyl-3-methylthiazolidine-2-thione, 4-hydroxythiazolidine-2-thione, 5-ethyl-3-thiazolidine-2-thione, 5-isopropyl-3-thiazolidine-2-thione, 5-isopropyl-3-methylthiazolidine-2-thione, 5-hydroxythiazolidine-2-thione, 3-ethylthiazolidine-2-thione, 3-propylthiazolidine-2-thione, 3-butylthiazolidine-2-thione, and 3-phenylthiazolidine-2-thione. From the viewpoint of easily maintaining the compression set of a vulcanized molded article to be low, the viewpoint of easily improving a vulcanization rate, and the viewpoint of easily obtaining excellent moldability, the specific sulfur-based compound preferably includes at least one selected from 4-methylthiazolidine-2-thione, 3-methylthiazolidine-2-thione, and 4-isopropyl-3-methylthiazolidine-2-thione. The specific sulfur-based compound can be used alone or in combination of two or more kinds thereof.

The content of the specific sulfur-based compound is 0.5 to 5.0 parts by mass with respect to 100 parts by mass of the chloroprene-based rubber. When the content of the specific sulfur-based compound is less than 0.5 parts by mass, an effect of accelerating the vulcanization of the chloroprene rubber composition to be obtained is low, and the vulcanization rate thereof cannot be improved. Furthermore, the elongation at break after heat aging may be degraded and the compression set may be deteriorated. When the content of the specific sulfur-based compound is more than 5.0 parts by mass, the vulcanization insufficiency of a vulcanized molded article to be obtained may occur to deteriorate the compression set. Furthermore, excellent moldability may not be obtained.

The content of the specific sulfur-based compound is preferably 0.75 parts by mass or more and more preferably 1.0 part by mass or more, from the viewpoint of easily improving a vulcanization rate. From the viewpoint of easily obtaining excellent moldability and the viewpoint of easily maintaining the compression set of a vulcanized molded article to be low, the content of the specific sulfur-based compound is preferably 4.5 parts by mass or less, more preferably 4.0 parts by mass or less, further preferably 3.5 parts by mass or less, particularly preferably 3.0 parts by mass or less, extremely preferably 2.5 parts by mass or less, highly preferably 2.0 parts by mass or less, even more preferably 1.5 parts by mass or less, and further preferably 1.0 part by mass or less. From these viewpoints, the content of the specific sulfur-based compound is preferably 0.75 to 3.0 parts by mass and more preferably 1.0 to 2.0 parts by mass. The content of the specific sulfur-based compound is preferably more than 1.0 part by mass, more preferably 1.5 parts by mass or more, further preferably 2.0 parts by mass or more, particularly preferably 2.5 parts by mass or more, extremely preferably 3.0 parts by mass or more, highly preferably 3.5 parts by mass or more, even more preferably 4.0 parts by mass or more, and further preferably 4.5 parts by mass or more, from the viewpoint of easily further improving a vulcanization rate.

From the viewpoint of easily maintaining the compression set of a vulcanized molded article to be low, the viewpoint of easily improving a vulcanization rate, and the viewpoint of easily obtaining excellent moldability, the content of the specific sulfur-based compound is preferably 80% by mass or more, more preferably 90% by mass or more, further preferably 95% by mass or more, particularly preferably 98% by mass or more, and extremely preferably 99% by mass or more, on the basis of the total amount of the sulfur-based compound (the total amount of the sulfur-based compound contained in the chloroprene rubber composition of the present embodiment). An embodiment in which the sulfur-based compound in the chloroprene rubber composition of the present embodiment is substantially composed of the specific sulfur-based compound (substantially 100% by mass of the sulfur-based compound is the specific sulfur-based compound) may be employed.

The chloroprene rubber composition of present embodiment may contain other sulfur-based compound other than the specific sulfur-based compound. As such a sulfur-based compound, for example, a vulcanization accelerator, which is generally used in the vulcanization of the chloroprene rubber, can be used. Examples of the vulcanization accelerator include vulcanization accelerators such as thiourea-based, guanidine-based, thiuram-based, and thiazole-based vulcanization accelerators; dimethylammonium hydrogen isophthalate; and 1,2-dimercapto-1,3,4-thiadiazole derivatives. Examples of the thiourea-based vulcanization accelerator include ethylene thiourea, diethyl thiourea, trimethyl thiourea, triethyl thiourea, and N, N'-diphenyl thiourea, and at least one selected from trimethyl thiourea and ethylene

thiourea is preferred. The sulfur-based compound can be used alone or in combination of two or more kinds thereof.

The content of the sulfur-based compound (the total amount of the sulfur-based compound contained in the chloroprene rubber composition of the present embodiment) is preferably in the following range with respect to 100 parts by mass of the chloroprene-based rubber. The content of the sulfur-based compound is preferably 0.5 parts by mass or more, more preferably 0.75 parts by mass or more, and further preferably 1.0 part by mass or more, from the viewpoint of easily improving a vulcanization rate. From the viewpoint of easily obtaining excellent moldability and the viewpoint of easily maintaining the compression set of a vulcanized molded article to be low, the content of the sulfur-based compound is preferably 5.0 parts by mass or less, more preferably 4.5 parts by mass or less, further preferably 4.0 parts by mass or less, particularly preferably 3.5 parts by mass or less, extremely preferably 3.0 parts by mass or less, highly preferably 2.5 parts by mass or less, even more preferably 2.0 parts by mass or less, further preferably 1.5 parts by mass or less, and particularly preferably 1.0 part by mass or less. From these viewpoints, the content of the sulfur-based compound is preferably 0.5 to 5.0 parts by mass. From the viewpoint of easily further improving a vulcanization rate, the content of the sulfur-based compound is preferably more than 1.0 part by mass, more preferably 1.5 parts by mass or more, further preferably 2.0 parts by mass or more, particularly preferably 2.5 parts by mass or more, extremely preferably 3.0 parts by mass or more, highly preferably 3.5 parts by mass or more, even more preferably 4.0 parts by mass or more, further preferably 4.5 parts by mass or more, and particularly preferably 5.0 parts by mass or more.

(3) Xanthogen disulfide compound

The chloroprene rubber composition of the present embodiment contains a xanthogen disulfide compound represented by General Formula (2) below. The xanthogen disulfide compound can accelerate the vulcanization of the chloroprene rubber composition to be obtained, by a synergic effect with the aforementioned specific sulfur-based compound.

[Chemical Formula 4]

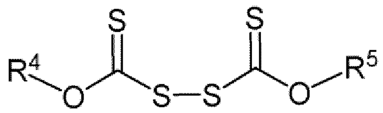 (2)

[In the formula, $R^4$ and $R^5$ each independently represent a hydrogen atom or an alkyl group having 1 to 8 carbon atoms; and the hydrogen atom of the alkyl group may be substituted with a substituent.]

From the viewpoint of easily maintaining the compression set of a vulcanized molded article to be low, the viewpoint of easily improving a vulcanization rate, and the viewpoint of easily obtaining excellent moldability, the number of carbon atoms of the alkyl group in the xanthogen disulfide compound is preferably 1 to 4 and more preferably 2 or 3.

Specific examples of the xanthogen disulfide compound include xanthogen disulfide, dimethylxanthogen disulfide, diethylxanthogen disulfide, dipropylxanthogen disulfide, diisopropylxanthogen disulfide, dibutylxanthogen disulfide, dipentylxanthogen disulfide, dihexylxanthogen disulfide, diheptylxanthogen disulfide, and dioctylxanthogen disulfide. From the viewpoint of easily maintaining the compression set of a vulcanized molded article to be low, the viewpoint of easily improving a vulcanization rate, and the viewpoint of easily obtaining excellent moldability, the xanthogen disulfide compound preferably includes a dialkylxanthogen disulfide compound in which $R^4$ and $R^5$ in General Formula (2) are an alkyl group having 1 to 8 carbon atoms, and more preferably includes at least one selected from dimethylxanthogen disulfide, diethylxanthogen disulfide, dipropylxanthogen disulfide, diisopropylxanthogen disulfide, dibutylxanthogen disulfide, dipentylxanthogen disulfide, dihexylxanthogen disulfide, diheptylxanthogen disulfide, and dioctylxanthogen disulfide. In the dialkylxanthogen disulfide compound, $R^4$ and $R^5$ may be identical to or different from each other. The xanthogen disulfide compound can be used alone or in combination of two or more kinds thereof.

The content of the xanthogen disulfide compound is more than 0 parts by mass and 2.0 parts by mass or less with respect to 100 parts by mass of the chloroprene-based rubber. When the content of the xanthogen disulfide compound is 0 parts by mass, an effect of accelerating the vulcanization of the chloroprene rubber composition to be obtained is low, and the vulcanization rate thereof cannot be improved. Furthermore, the vulcanization insufficiency of a vulcanized molded article to be obtained may occur to deteriorate the compression set and excellent moldability may not be obtained. When the content of the xanthogen disulfide compound is more than 2.0 parts by mass, the vulcanization insufficiency of a vulcanized molded article to be obtained may occur to deteriorate the compression set and excellent moldability may not be obtained.

From the viewpoint of easily maintaining the compression set of a vulcanized molded article to be low and the viewpoint of easily improving a vulcanization rate, the content of the xanthogen disulfide compound is preferably 0.05 parts by mass or more, more preferably 0.08 parts by mass or more, further preferably 0.1 parts by mass or more,

particularly preferably 0.2 parts by mass or more, extremely preferably 0.3 parts by mass or more, highly preferably 0.4 parts by mass or more, and even more preferably 0.5 parts by mass or more. The content of the xanthogen disulfide compound is preferably 1.75 parts by mass or less, more preferably 1.5 parts by mass or less, further preferably 1.25 parts by mass or less, particularly preferably 1.0 part by mass or less, extremely preferably 0.75 parts by mass or less, and highly preferably 0.5 parts by mass or less, from the viewpoint of easily maintaining the compression set of a vulcanized molded article to be low. From these viewpoints, the content of the xanthogen disulfide compound is preferably 0.05 to 2.0 parts by mass, more preferably 0.1 to 2.0 parts by mass, and further preferably 0.3 to 1.0 part by mass. The content of the xanthogen disulfide compound is preferably 0.75 parts by mass or more, more preferably 1.0 part by mass or more, further preferably 1.25 parts by mass or more, and particularly preferably 1.5 parts by mass or more, from the viewpoint of easily further improving a vulcanization rate.

(4) Other compounds

The chloroprene rubber composition of the present embodiment may contain a filler or a reinforcing agent; a plasticizer; a vulcanizing agent; a vulcanization aid; a processing aid; an anti-aging agent; or the like.

Examples of the filler or the reinforcing agent include carbon black, silica, clay, talc, and calcium carbonate. Each of the filler and the reinforcing agent can be used alone or in combination of two or more kinds thereof. The content of the filler or the reinforcing agent is preferably 5 to 100 parts by mass with respect to 100 parts by mass of the chloroprene-based rubber or 100 parts by mass of the chloroprene rubber composition.

The plasticizer is not particularly limited as long as it is compatible with the chloroprene-based rubber, and examples thereof include vegetable oils (such as rape seed oil), phthalate-based plasticizers, DOS, DOA, ester-based plasticizers, ether ester-based plasticizers, thioether-based plasticizers, aromatic oils, and naphthene oils. The plasticizer can be used alone or in combination of two or more kinds thereof according to properties demanded for the chloroprene rubber composition. The content of the plasticizer is preferably 5 to 50 parts by mass with respect to 100 parts by mass of the chloroprene-based rubber or 100 parts by mass of the chloroprene rubber composition.

The vulcanizing agent is not particularly limited, and is preferably a metal oxide. Specific examples of the metal oxide include zinc oxide, magnesium oxide, lead oxide, trilead tetraoxide, iron trioxide, titanium dioxide, calcium oxide, and hydrotalcite. The vulcanizing agent can be used alone or in combination of two or more kinds thereof. The content of the vulcanizing agent is preferably 3 to 15 parts by mass with respect to 100 parts by mass of the chloroprene-based rubber or 100 parts by mass of the chloroprene rubber composition. Vulcanization can also be further effectively performed by using the vulcanizing agent in combination with the aforementioned vulcanization accelerator.

The chloroprene rubber composition of the present embodiment can contain at least one compound selected from a bifunctional ester compound and a trifunctional ester compound, as a vulcanization aid, from the viewpoint of improving the vulcanization rate or the vulcanization density thereof, and the like.

Specific examples of the vulcanization aid include trimethylol propane, ethylene glycol dimethacrylate, triallyl isocyanate, triallyl cyanate, and a maleimide-based compound. The vulcanization aid can be used alone or in combination of two or more kinds thereof.

Examples of the maleimide-based compound include N-cyclohexylmaleimide, N-methylmaleimide, N-ethylmaleimide, N-isopropylmaleimide, N-n-butylmaleimide, 2-methyl-N-phenylmaleimide, 2,3-dimethylmaleimide, 2-ethylmaleimide, 2-n-butylmaleimide, N-benzylmaleimide, N,N'-1,2-ethylbismaleimide, N,N'-1,2-hexylbismaleimide, N-propionic acid maleimide, 4,4'-bismaleimidediphenyl methane, 6,7-methylenedioxy-4-methyl-3-coumaric acid maleimide, bis(3-ethyl-5-methyl-4-maleimidephenyl)methane, N-bromomethyl-2,3-dichloromaleimide, N-(3-maleimidebenzoyloxy)succinic acid, N-(3-maleimidepropioxy)succinic acid, N-(3-maleimidebutyloxy)succinic acid, N-(3-maleimidehexyloxy)succinic acid, N-(4-dimethylamino-3,5-dinitrophenyl)maleimide, N,N'-1,2-phenylenedimaleimide, N,N'-1,3-phenylenedimaleimide, N,N'-1,4-phenylenedimaleimide, N-N'-1,3-naphthenedimaleimide, N,N'-(4-methyl-1,3-phenylene)bismaleimide, N-(1-pyrenyl)maleimide, 1,1'-(methylenedi-4,1-phenylene)bismaleimide, N-[4-(2-benzimidazolyl)phenyl]maleimide, N-(9-acridinyl)maleimide, N-hydroxymaleimide, and 2,3-diphenylmaleimide.

The content of the vulcanization aid is preferably in the following range with respect to 100 parts by mass of the chloroprene-based rubber or 100 parts by mass of the chloroprene rubber composition. The content of the vulcanization aid is preferably 0.2 parts by mass or more and more preferably 0.5 parts by mass or more, from the viewpoint of easily and sufficiently obtaining an effect of adding a vulcanization aid. The content of the vulcanization aid is preferably 5 parts by mass or less and more preferably 4 parts by mass or less, from the viewpoint of easily suppressing an excessive increase in hardness of a vulcanizate to be obtained. From these viewpoints, the content of the vulcanization aid is preferably 0.2 to 5 parts by mass and more preferably 0.5 to 4 parts by mass.

Examples of the processing aid include fatty acids such as stearic acid; paraffin-based processing aids such as polyethylene; and fatty acid amides. The processing aid can be used alone or in combination of two or more kinds thereof. The content of the processing aid is preferably 0.5 to 5 parts by mass with respect to 100 parts by mass of the chloroprene-based rubber or 100 parts by mass of the chloroprene rubber composition.

Examples of the anti-aging agent include an amine-based anti-aging agent, an imidazole-based anti-aging agent, a metal carbamate salt, a phenol-based anti-aging agent, wax, and an ozone-resistant anti-aging agent (for example, N-phenyl-N'-(1,3-dimethylbutyl)-p-phenylenediamine). From the viewpoint of having a large effect of improving heat resistance, the anti-aging agent is preferably an amine-based anti-aging agent, more preferably at least one selected from 4,4'-bis($\alpha$,$\alpha$-dimethylbenzyl)diphenylamine and octylated diphenylamine, and further preferably 4,4'-bis($\alpha$,$\alpha$-dimethylbenzyl)diphenylamine. The anti-aging agent can be used alone or in combination of two or more kinds thereof.

The chloroprene rubber composition of the present embodiment can also contain phenothiazine from the viewpoint of improving the processing stability of the chloroprene rubber composition, and the like.

The content of the phenothiazine is preferably 0.1 to 2 parts by mass and more preferably 0.3 to 1.5 parts by mass with respect to 100 parts by mass of the chloroprene-based rubber or 100 parts by mass of the chloroprene rubber composition. By using phenothiazine in these ranges, an effect of improving the processing stability of the chloroprene rubber composition to be obtained is high.

The chloroprene rubber composition of the present embodiment can be obtained by kneading the aforementioned compound at a temperature equal to or lower than the vulcanization temperature thereof. As a kneading apparatus, a mixer, a banbury mixer, a kneader mixer, a twin roll, or the like can be used.

<Molded article and vulcanized molded article>

A molded article of present embodiment is a molded article of the chloroprene rubber composition of the present embodiment and can be obtained by molding the chloroprene rubber composition of the present embodiment. A vulcanized molded article of the present embodiment is a vulcanized molded article of the chloroprene rubber composition of the present embodiment. The vulcanized molded article of the present embodiment can be obtained by molding the chloroprene rubber composition of the present embodiment into various desired shapes and then vulcanizing or by vulcanizing the chloroprene rubber composition of the present embodiment and then molding into various shapes. As a method of molding a vulcanized molded article from the chloroprene rubber composition, methods such as press molding, extrusion molding, and calendering molding can be used.

The vulcanization temperature of the chloroprene rubber composition may be appropriately set according to the composition thereof, and is preferably 140°C to 220°C and more preferably 150°C to 180°C. The vulcanizing time is also appropriately set according to the composition or shape of the chloroprene rubber composition, and may be 10 to 60 minutes.

The vulcanized molded article of the present embodiment is obtained by vulcanizing and molding the chloroprene rubber composition of the present embodiment and has compression set, a vulcanization rate, and moldability which are improved.

## Examples

Hereinafter, the present invention will be more specifically described on the basis of Examples. Note that, Examples described below are only typical examples of the present invention and the scope of the present invention is not restricted thereby at all.

<Production of chloroprene-acrylonitrile copolymer rubber>

To a 3-L polymerization tank equipped with a heating/cooling jacket and a stirrer, 24 parts by mass of a chloroprene monomer, 24 parts by mass of an acrylonitrile monomer, 0.5 parts by mass of diethylxanthogen disulfide, 200 parts by mass of pure water, 5.00 parts by mass of potassium rosinate (manufactured by Harima Chemicals, Inc.), 0.40 parts by mass of sodium hydroxide, and 2.0 parts by mass of sodium salt of $\beta$-naphthalene sulfonic acid formalin condensate (manufactured by Kao Corporation) were added. Next, 0.1 parts by mass of potassium persulfate was added as a polymerization initiator, and then emulsion polymerization was performed under a nitrogen flow at a polymerization temperature of 40°C. Portionwise addition of the chloroprene monomer was started 20 seconds after polymerization initiation, and was continuously performed by adjusting the portionwise addition flow rate with an electromagnetic valve on the basis of the refrigerant calorimetric change for 10 seconds after polymerization initiation, and thereafter by re-adjusting the flow rate every 10 seconds. At the time point when the polymerization rate with respect to the total amount of the chloroprene monomer and the acrylonitrile monomer became 50%, phenothiazine as a polymerization terminator was added to terminate the polymerization. Thereafter, by removing the unreacted monomer in the reaction solution under reduced pressure, a chloroprene-acrylonitrile copolymer latex was obtained.

The polymerization rate of the chloroprene-acrylonitrile copolymer latex was calculated from the dry mass of the air-dried chloroprene-acrylonitrile copolymer latex. Specifically, calculation was conducted by the following Formula (I) below. In the formula, the solid concentration refers to the concentration [% by mass] of the solid fraction obtained

by heating 2 g of the sampled chloroprene-acrylonitrile copolymer latex at 130°C to remove volatile components such as the solvent (water), volatile chemicals, and the raw materials. The total input amount refers to the total amount of the raw materials, the reagents, and the solvent (water) which had been input into the polymerization tank from the polymerization initiation through a certain time. The non-evaporated residual fraction refers to the mass of the chemicals which did not evaporate under a condition of 130°C and remained as a solid fraction together with the polymer, among the chemicals and the raw materials which had been input from the polymerization initiation through a certain time. The monomer input amount refers to the total amount of the monomer which was input initially to the polymerization tank and the monomer which was added portionwise from the polymerization initiation through a certain time. Note that, the "monomer" described herein refers to the total amount of the chloroprene monomer and the acrylonitrile monomer.

$$\text{Polymerization rate [\%]} = \{(\text{Total input amount [g]} \times \text{Solid concentration [\% by mass]}/100) - (\text{Non-evaporated residual fraction [g]})\}/\text{Monomer input amount [g]} \times 100 \quad \ldots \text{(I)}$$

The aforementioned chloroprene-acrylonitrile copolymer latex was adjusted at pH 7.0, and freeze-coagulated on a metal plate cooled to -20°C so as to be demulsified, thereby obtaining a sheet. This sheet was washed with water and dried for 15 minutes at 130°C, thereby obtaining a chloroprene-acrylonitrile copolymer rubber in a solid form.

The number average molecular weight (Mn), the weight average molecular weight (Mw), and the molecular weight distribution (Mw/Mn) of the chloroprene-acrylonitrile copolymer rubber were measured by a high-speed GPC apparatus (TOSOH HLC-8320GPC: manufactured by Tosoh Corporation) (in terms of standard polystyrene) after the chloroprene-acrylonitrile copolymer rubber was treated with THF to obtain a solution having a sample adjustment concentration of 0.1% by mass. At this time, TSK Guard Column HHR-H was used as a precolumn, three columns of HSK gel GMHHR-H were used as an analytical column, outflowing was performed at a sample pump pressure of 8.0 to 9.5 MPa and a flow rate of 1 ml/min at 40°C, and detection was conducted by a differential refractometer.

The outflow time and the molecular weight were obtained using a calibration curve prepared by measuring nine standard polystyrene samples in total whose molecular weights listed below were known.

Mw = $8.42\times10^6$, $1.09\times10^6$ $7.06\times10^5$, $4.27\times10^5$, $1.90\times10^5$, $9.64\times10^4$, $3.79\times10^4$, $1.74\times10^4$, $2.63\times10^3$

The amount of the structural unit derived from the unsaturated nitrile monomer contained in the chloroprene-acrylonitrile copolymer rubber was calculated from the content of the nitrogen atom in the chloroprene-acrylonitrile copolymer rubber. Specifically, the structural unit derived from the acrylonitrile monomer was calculated by measuring the content of the nitrogen atom in 100 mg of the chloroprene-acrylonitrile copolymer rubber using an element analysis apparatus (SUMIGRAPH 220F: manufactured by Sumika Chemical Analysis Service, Ltd.). The measurement of element analysis was performed under the following conditions. As for the electric furnace temperature, a reaction furnace, a reduction furnace, a column temperature, and a detector temperature were set at 900°C, 600°C, 70°C, and 100°C, respectively, oxygen was flowed as a combustion gas at 0.2 ml/min, and helium was flowed as a carrier gas at 80 ml/min. A calibration curve was made using aspartic acid whose nitrogen content is known (10.52%) as a standard substance.

The number average molecular weight (Mn) of the chloroprene-acrylonitrile copolymer rubber was $138\times10^3$/mol, the weight average molecular weight (Mw) was $473\times10^3$ g/mol, and the molecular weight distribution (Mw/Mn) was 3.4. Furthermore, the amount of the structural unit derived from the acrylonitrile monomer in the chloroprene-acrylonitrile copolymer rubber was 9.9% by mass.

<Production of chloroprene rubber composition>

100 parts by mass of the aforementioned chloroprene-acrylonitrile copolymer rubber or chloroprene rubber (manufactured by Denka Company Limited, mercaptan-modified chloroprene rubber, crude rubber Mooney viscosity $ML_{1+4}$ (100°C) = 60), the sulfur-based compound presented in Table 1, the xanthogen disulfide compound presented in Table 1, 0.5 parts by mass of stearic acid (manufactured by New Japan Chemical Co., Ltd., STEARIC ACID 50S), 50 parts by mass of carbon black (manufactured by TOKAI CARBON CO., LTD., SEAST SO, FEF Carbon), 10 parts by mass of a plasticizer (manufactured by DAIHACHI CHEMICAL INDUSTRY CO., LTD., dioctyl sebacate), 4 parts by mass of magnesium oxide (manufactured by Kyowa Chemical Industry Co., Ltd., KYOWAMAG (registered trademark) 150), 3 parts by mass of a heat-resistant anti-aging agent (manufactured by OUCHI SHINKO CHEMICAL INDUSTRIAL CO., LTD., NOCRAC (registered trademark) CD, 4,4'-bis($\alpha$,$\alpha$-dimethylbenzyl)diphenylamine), 5 parts by mass of zinc oxide (manufactured by SAKAI CHEMICAL INDUSTRY CO., LTD., Zinc Oxide No. 2), and 1 part by mass of an ozone-resistant anti-aging agent (manufactured by OUCHI SHINKO CHEMICAL INDUSTRIAL CO., LTD., NOCRAC (registered trademark) 6C, N-phenyl-N'-(1,3-dimethylbutyl)-p-phenylenediamine) were kneaded with an 8-inch open roll, thereby obtaining a chloroprene rubber composition. In the table, "phr" means "part(s) by mass".

The sulfur-based compound and the xanthogen disulfide compound presented in Table 1 are as follows.

Sulfur-based compound: 3-Methylthiazolidine-2-thione, manufactured by LANXESS, RHENOGRAN MTT-80
DXD: Diisopropylxanthogen disulfide, manufactured by SANSHIN CHEMICAL INDUSTRY CO., LTD.
EXD: Diethylxanthogen disulfide, manufactured by OUCHI SHINKO CHEMICAL INDUSTRIAL CO., LTD.

<Evaluation of chloroprene rubber composition>

(Vulcanization rate)

Regarding the aforementioned chloroprene rubber composition, the vulcanization time (T90 and T10) at 170°C × 30 minutes was measured using an oscillation disc rheometer (No. 292 ROTORLESS RHEOMETER, manufactured by Toyo Seiki Seisaku-sho, Ltd.) according to Standard of THE SOCIETY OF RUBBER SCIENCE AND TECHNOLOGY, JAPAN, SRIS 3102-1977, and the vulcanization rate (T90 - T10) was calculated. A case where the vulcanization rate is a value of 20 minutes or shorter was evaluated as "passing".

(Moldability: scorch time)

A Mooney scorch test at 125°C of the aforementioned chloroprene rubber composition was performed according to JIS-K 6300-1 to measure "scorch time t5". Taking into consideration of actual product usage, a case where the "scorch time t5" is 20 minutes or longer and 40 minutes or shorter was evaluated as "passing". The "scorch time t5" refers to a time (min) necessary for increasing the viscosity of the chloroprene rubber composition from the minimum viscosity to 5% when the scorch time is measured.

<Production and evaluation of vulcanized molded article>

The aforementioned chloroprene rubber composition was subjected to press vulcanization under a condition of 170°C × 20 minutes to produce a sheet-shaped vulcanized molded article having a thickness of 2 mm. Evaluation of compression set at 130°C for 72 hours of this vulcanized molded article was performed on the basis of JIS K6262. A case where the compression set was a value of 54% or less was evaluated as "passing". Evaluation results are presented in Table 1.

[Table 1]

| | Unit | Example | | | | | | | | | | Comparative Example | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| Chloroprene-acrylonitrile copolymer rubber | phr | 10 0 | 10 0 | 10 0 | 10 0 | 10 0 | 10 0 | | | 10 0 | 10 0 | 10 0 | 10 0 | 10 0 | 10 0 | 100 | |
| Chloroprene rubber | phr | | | | | | | 10 0 | 10 0 | | | | | | | | 100 |
| MTT-80 | phr | 1 | 3 | 5 | 1 | 1 | 1 | 1 | 1 | 1 | 1 | 0.3 | 6 | 6 | 1 | 1 | 1 |
| DXD | phr | 0.5 | 0.5 | 0.5 | 1 | 2 | 0.0 5 | 0.5 | 1 | | | 0.5 | 2 | 0.5 | | 3 | |
| EXD | phr | | | | | | | | | 0.5 | 1 | | | | | | |
| Vulcanization rate (170°C × 30 min, T90-T10) | mi n | 17 | 14 | 9 | 15 | 13 | 20 | 17 | 15 | 19 | 17 | 26 | 6 | 8 | 22 | 12 | 23 |
| Scorch time (ML at 125°C, t5) | mi n | 34 | 29 | 21 | 36 | 39 | 24 | 22 | 25 | 28 | 35 | 48 | 15 | 18 | 19 | 45 | 17 |
| Compression set (130°C × 72 h) | % | 46 | 49 | 53 | 49 | 53 | 53 | 28 | 30 | 49 | 52 | 64 | 58 | 55 | 55 | 59 | 34 |

From the results presented in Table 1, it was found that, when a vulcanized molded article is obtained using the chloroprene rubber compositions of Examples, the vulcanization rate is improved while maintaining compression set. Since this vulcanized molded article has these properties, the vulcanized molded article is excellent in productivity and can be suitably used as a molded article such as an automobile rubber member (such as a seal material), a hose (hose material), a rubber molded object, and gasket. From the results presented in Table 1, it was also found that, by using the chloroprene rubber compositions of Examples, excellent moldability is obtained.

## Claims

1. A chloroprene rubber composition comprising: 100 parts by mass of a chloroprene-based rubber; 0.5 to 5.0 parts by mass of a sulfur-based compound represented by General Formula (1) below; and more than 0 parts by mass and 2.0 parts by mass or less of a xanthogen disulfide compound represented by General Formula (2) below.

[Chemical Formula 1]

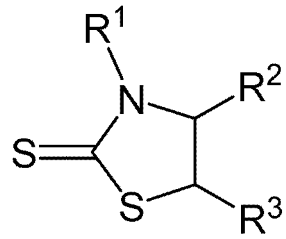

(1)

[In the formula, $R^1$ represents a hydrogen atom, a hydroxyl group, or an alkyl group having 1 to 8 carbon atoms, and $R^2$ and $R^3$ each independently represent a hydrogen atom or an alkyl group having 1 to 8 carbon atoms.]

[Chemical Formula 2]

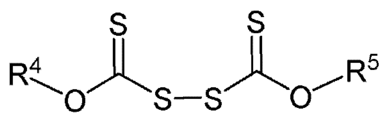

(2)

[In the formula, $R^4$ and $R^5$ each independently represent a hydrogen atom or an alkyl group having 1 to 8 carbon atoms.]

2. The chloroprene rubber composition according to claim 1, wherein the sulfur-based compound comprises at least one selected from 4-methylthiazolidine-2-thione, 3-methylthiazolidine-2-thione, and 4-isopropyl-3-methylthiazolidine-2-thione.

3. The chloroprene rubber composition according to claim 1 or 2, wherein the xanthogen disulfide compound comprises at least one selected from dimethylxanthogen disulfide, diethylxanthogen disulfide, dipropylxanthogen disulfide, diisopropylxanthogen disulfide, dibutylxanthogen disulfide, dipentylxanthogen disulfide, dihexylxanthogen disulfide, diheptylxanthogen disulfide, and dioctylxanthogen disulfide.

4. The chloroprene rubber composition according to any one of claims 1 to 3, wherein the chloroprene-based rubber comprises at least one selected from a 2-chloro-1,3-butadiene homopolymer and a 2-chloro-1,3-butadiene copolymer, and
the 2-chloro-1,3-butadiene copolymer comprises a copolymer of 2-chloro-1,3-butadiene and at least one monomer selected from 2,3-dichloro-1,3-butadiene and acrylonitrile.

5. A vulcanized molded article of the chloroprene rubber composition according to any one of claims 1 to 4.

**Patentansprüche**

1. Chloroprenkautschukzusammensetzung, umfassend: 100 Massenteile eines Chloropren-basierten Kautschuks; 0,5 bis 5,0 Massenteile einer Schwefel-basierten Verbindung, dargestellt durch die nachstehende allgemeine Formel (1); und mehr als 0 Massenteile und 2,0 Massenteile oder weniger einer Xanthogendisulfid-Verbindung, dargestellt durch die nachstehende allgemeine Formel (2).

[Chemische Formel 1]

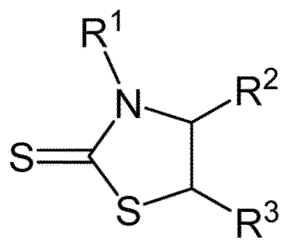

(1)

[In der Formel stellt $R^1$ ein Wasserstoffatom, eine Hydroxygruppe oder eine Alkylgruppe mit 1 bis 8 Kohlenstoffatomen dar und $R^2$ und $R^3$ stellen jeweils unabhängig voneinander ein Wasserstoffatom oder eine Alkylgruppe mit 1 bis 8 Kohlenstoffatomen dar.]

[Chemische Formel (2)]

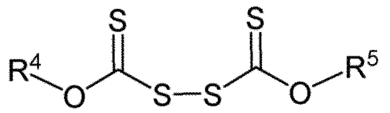

(2)

[In der Formel stellen $R^4$ und $R^5$ jeweils unabhängig voneinander ein Wasserstoffatom oder eine Alkylgruppe mit 1 bis 8 Kohlenstoffatomen dar.]

2. Chloroprenkautschukzusammensetzung gemäß Anspruch 1, worin die Schwefel-basierte Verbindung mindestens eine ausgewählt aus 4-Methylthiazolidin-2-thion, 3-Methylthiazolidin-2-thion und 4-Isopropyl-3-methylthiazolidin-2-thion umfasst.

3. Chloroprenkautschukzusammensetzung gemäß Anspruch 1 oder 2, worin die Xanthogendisulfid-Verbindung mindestens eine ausgewählt aus Dimethylxanthogendisulfid, Diethylxanthogendisulfid, Dipropylxanthogendisulfid, Diisopropylxanthogendisulfid, Dibutylxanthogendisulfid, Dipentylxanthogendisulfid, Dihexylxanthogendisulfid, Diheptylxanthogendisulfid und Dioctylxanthogendisulfid umfasst.

4. Chloroprenkautschukzusammensetzung gemäß einem der Ansprüche 1 bis 3, worin der Chloropren-basierte Kautschuk mindestens einen ausgewählt aus einem 2-Chlor-1,3-butadien-Homopolymer und einem 2-Chlor-1,3-butadien-Copolymer umfasst, und
das 2-Chlor-1,3-butadien-Copolymer ein Copolymer aus 2-Chlor-1,3-butadien und mindestens einem Monomer ausgewählt aus 2,3-Dichlor-1,3-butadien und Acrylnitril umfasst.

5. Vulkanisationsformkörper aus der Chloroprenkautschukzusammensetzung gemäß einem der Ansprüche 1 bis 4.

**Revendications**

1. Composition de caoutchouc chloroprène comprenant : 100 parties en masse d'un caoutchouc à base de chloroprène ; de 0,5 à 5,0 parties en masse d'un composé à base de soufre représenté par la formule générale (1) figurant ci-dessous ; et plus de 0 parties en masse et 2,0 parties en masse ou moins d'un composé disulfure de xanthogène représenté par la formule générale (2) figurant ci-dessous.

[Formule chimique 1]

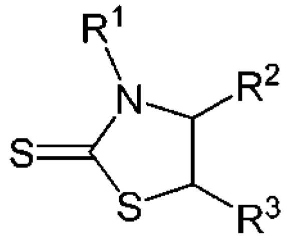

(1)

[Dans la formule, $R^1$ représente un atome d'hydrogène, un groupe hydroxyle, ou un groupe alkyle présentant de 1 à 8 atomes de carbone, et $R^2$ et $R^3$ représentent chacun indépendamment un atome d'hydrogène ou un groupe alkyle présentant de 1 à 8 atomes de carbone.]

[Formule chimique 2]

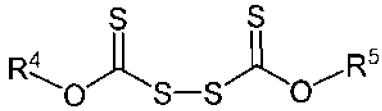

(2)

[Dans la formule, $R^4$ et $R^5$ représentent chacun indépendamment un atome d'hydrogène ou un groupe alkyle présentant de 1 à 8 atomes de carbone.]

**2.** Composition de caoutchouc chloroprène selon la revendication 1, dans laquelle le composé à base de soufre comprend au moins un élément choisi parmi le 4-méthylthiazolidine-2-thione, le 3-méthylthiazolidine-2-thione, et le 4-isopropyl-3-méthylthiazolidine-2-thione.

**3.** Composition de caoutchouc chloroprène selon la revendication 1 ou 2, dans laquelle le composé disulfure de xanthogène comprend au moins un élément choisi parmi le disulfure de diméthylxanthogène, le disulfure de diéthylxanthogène, le disulfure de dipropylxanthogène, le disulfure de diisopropylxanthogène, le disulfure de dibutylxanthogène, le disulfure de dipentylxanthogène, le disulfure de dihexylxanthogène, le disulfure de diheptylxanthogène et le disulfure de dioctylxanthogène.

**4.** Composition de caoutchouc chloroprène selon l'une quelconque des revendications 1 à 3, dans laquelle le caoutchouc à base de chloroprène comprend au moins un élément choisi parmi un homopolymère de 2-chloro-1,3-butadiène et un copolymère de 2-chloro-1,3-butadiène, et
le copolymère 2-chloro-1,3-butadiène comprend un copolymère de 2-chloro-1,3-butadiène et d'au moins un monomère choisi parmi le 2,3-dichloro-1,3-butadiène et l'acrylonitrile.

**5.** Article moulé vulcanisé de la composition de caoutchouc chloroprène selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001181451 A
- JP 2009275124 A
- JP 2010106227 A
- JP 2005060546 A